# EUROPÄISCHE PATENTSCHRIFT

(11) **EP 1 203 172 B1**
(45) Veröffentlichungstag und Bekanntmachung des Hinweises auf die Patenterteilung: **06.11.2002**
(21) Anmeldenummer: 00967535.6
(22) Anmeldetag: 18.08.2000
(51) Int. Cl.: F16H 1/32, H02K 7/116

(54) **GETRIEBEMOTOR**
GEARMOTOR
MOTO-REDUCTEUR

(30) Priorität: 20.08.1999 DE 19939608
(43) Veröffentlichungstag der Anmeldung: 08.05.2002
(73) Patentinhaber: Wittenstein Motion Control GmbH, 97999 Igersheim (DE)
(72) Erfinder: BAYER, Thomas, 97999 Igersheim (DE); HENLE, Jörg, 97990 Weikersheim (DE)
(74) Vertreter: Patentanwalts-Partnerschaft, Rotermund + Pfusch + Bernhard
(86) Internationale Anmeldenummer: DE0002838
(87) Internationale Veröffentlichungsnummer: WO01014767

(56) Entgegenhaltungen:
- EP-B- 0 538 743
- US-A- 1 563 945
- US-A- 2 881 619

## Beschreibung

Die Erfindung betrifft einen Getriebemotor, bei dem der Motor ein Elektromotor und das Getriebe ein Zahnradumlaufgetriebe ist.

Ein derartiger Getriebemotor ist aus US 2 881 619 A bekannt.

Die Erfindung beschäftigt sich mit dem Problem, eine solchen Motor volumenmäßig klein, insbesondere mit kurzer Baulänge, auszubilden.

Dieses Problem wird bei dem gattungsgemäßen Getriebemotor durch eine Ausführung mit den kennzeichnenden Merkmalen des Anspruchs 1 gelöst. Hierdurch wird eine axial kurze Baulänge erreicht.

Zweckmäßige Ausgestaltungen sind Gegenstand der Unteransprüche.

Durch die Ausbildung des Zahnradumlaufgetriebes als Exzentergetriebe wird bei dem gattungsgemäßen Motorgetriebe ein besonders kleines Bauvolumen bei hoher Übersetzung erreicht.

So lassen sich beispielsweise Getriebe mit Außendurchmessern von < 15 mm bei Übersetzungen zwischen etwa i = 50 und 120 erreichen. Bei dem Getriebeteil des Getriebemotors läßt sich eine Länge von lediglich etwa 8 mm ohne weiteres erreichen.

Ein Ausführungsbeispiel der Erfindung ist in der Zeichnung dargestellt.

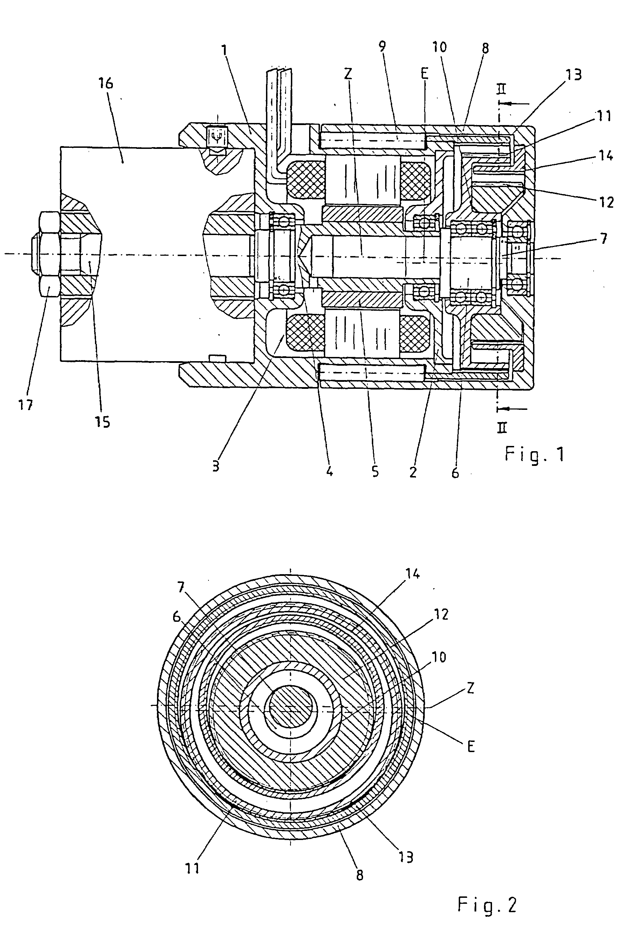

In dieser zeigen
- Fig. 1: einen Längsschnitt durch ein Motorgetriebe,
- Fig. 2: einen Schnitt durch den Getriebeteil des Getriebemotors nach der Linie II-II in Fig. 1.

In einem etwa zylindrischen Gehäuse 1 sind in axialer Richtung zwei Bereiche durch eine Trennwand 2 voneinander getrennt. Das Gehäuse 1 ist in dem die beiden Bereiche umschließenden Bereich topfförmig ausgebildet. In dem zwischen der geschlossenen Stirnwand des topfförmigen Gehäuses 1 und der Trennwand 2 ist ein Elektromotor 3 angeordnet. Dieser Elektromotor 3 besteht aus einem am Gehäuse fest angebrachten Stator sowie einem mit einer Rotorwelle 4 verbundenen Rotor 4. Die. Rotorwelle 5 ragt zu beiden Seiten des Elektromotors 3 axial heraus. Der aus der Trennwand 2 herausragende Teil besteht aus einem ersten, an die Trennwand 2 angrenzenden Rotorwellen-Bereich 6 und einem sich hieran anschließenden, axial frei auslaufenden, zweiten Rotorwellen-Bereich 7.

Auf dem zweiten, axial frei auslaufenden Rotorwellen-Bereich 7 ist ein Flansch als Abtriebswelle 8 gelagert. Die Form der Abtriebswelle 8 ist topfförmig, wobei sich der frei auslaufende Zylindermantelbereich radial außen auf dem Gehäuse 1 drehgelagert abstützt. Als Drehlagerung kann eine Rollenlagerung 9 vorgesehen sein.

Der erste Rotorwellen-Bereich 6 verläuft mit einer Drehachse E um einen Wert e exzentrisch zu der Rotorwellen-Achse Z. Auf dem exzentrischen ersten Rotorwellen-Bereich 6 ist ein scheibenförmiges Kraftübertragungsmittel 10 drehbar gelagert. Dieses Kraftübertragungsmittel 10 ist mit zwei konzentrisch ineinänderliegenden Zahnkränzen ausgestattet, nämlich einem äußeren Zahnkranz 11 und einem radial mit Abstand in diesem liegenden, inneren Zahnkranz 12. Die beiden Zahnkränze 11 und 12 greifen in zugeordnete Hohlräder ein und zwar der äußere Zahnkranz 11 in ein gehäusefestes Hohlrad 13 und der innere Zahnkranz 12 in ein mit der Abtriebswelle 8 fest verbundenes, inneres Hohlrad 14.

Die beiden Hohlräder 13 und 14 besitzen unterschiedliche Zähnezahlen. Das Übersetzungsverhältnis des Getriebes wird bestimmt durch das Maß der gewählten Exzentrizität e sowie der Differenz der Zähnezahlen. Je nach dem, ob das drehende innere Hohlrad 14 gegenüber dem gehäusefesten, äußeren Hohlrad 13 eine größere oder kleinere Zähnezahl aufweist, liegt eine unterschiedliche Drehrichtung der Abtriebswelle 8 vor.

Für eine einfache Herstellbarkeit des beschriebenen Getriebemotors können verschiedene Teile miteinander verklebt sein. Verklebt mit den angrenzenden Teilen können beispielsweise sein der Rotor 5 und der Stator des Elektromotors, die Trennwand 2 zwischen Elektromotor- und Getriebebereich sowie die Hohlräder 13, 14 und der innere Zahnkranz 12. Eine solche Verklebung ist lediglich ein Beispiel für eine stoffschlüssige Verbindung, die auch durch Verschweißen, Löten oder dergleichen erreicht werden kann.

Die Rotorwelle 4 durchragt auch die geschlossene Stirnwand des Gehäuses 1, in der sie drehbar gelagert ist. Den dort nach außen überstehenden Bereich 15 der Rotorwelle 4 umgreift ein an dem Gehäuse 1 dreh- und verschiebefest befestigbarer mit dem Motorgetriebe zusammenwirkender Drehsensor 16. Zur axialen Fixierung des Drehsensors 16 an dem Gehäuse 1 ist die Rotorwelle 4 durch den Drehsensor 16 axial hindurchgeführt, damit auf dem aus dem Drehsensor 16 herausragenden Bereich ein den Drehsensor 16 axial verschiebefest fixierendes Verschlußmittel 17 vorgesehen werden kann. Das Verschlußmittel 17 kann zusammen mit der Rotorwelle 4 frei gegenüber dem Drehsensor 16 rotieren. Der Drehsensor 16 kann als Resolver oder Encoder ausgeführt sein. Bei dem beschriebenen Ausführungsbeispiel besitzt das Motorgetriebe einen Außendurchmesser von etwa 25 mm bei einer gesamten Länge der Kombination aus Motor und Getriebe von nur etwa 8 mm. Die erreichbare Übersetzung leigt bei etwa i = 60.

## Patentansprüche

1. Getriebemotor, bei dem
- der Motor ein Elektromotor (3) und das Getriebe ein Zahnradumlaufgetriebe ist,
- das Getriebe und der Elektromotor (3) in einem etwa zylindrischen Gehäuse (1) axial benachbart angeordnet sind,
- der Elektromotor (3) einen gehäusefesten Statorring mit einem in diesem um eine zentral in dem Gehäuse (1) verlaufende Achse (Z) rotierenden Rotor (5) auf einer fest mit diesem verbundenen Rotorwelle (4) als Antriebsmittel des Getriebes besitzt und
- die Rotorwelle (4) mit einem axial an den Elektromotor (3) angrenzenden ersten Wellenbereich (6) und einem weiteren sich axial daran anschließenden zweiten Wellenbereich (7) in das Getriebe eingreift,
- der erste Wellenbereich (6) mit einer Achse (E) gegenüber der Rotorwelle (4) mit der Achse (Z) exzentrisch versetzt ausgebildet ist, wobei die Achsen (Z und E) um einen Exzentrizitätswert (e) parallel beabstandet sind,
- auf dem exzentrisch versetzten ersten Wellenbereich (6) ein Kraftübertragungsmittel (10) mit zwei voneinander getrennten, zentrisch zu der E-Achse verlaufenden Umfangsverzahnungen (11, 12) rotiert, die als ein erster und zweiter Zahnkranz (11 bzw. 12) ausgebildet sind,
- beide Zahnkränze (11,12) in zentrisch zür Z-Achse verlaufenden, verzahnten Hohlrädern kämmen, nämlich der erste Zahnkranz (11) in einem ersten Hohlrad (13) und der zweite Zahnkranz (12) in einem zweiten Hohlrad (14),
- eines der beiden verzahnten Hohlräder (13, 14) fest mit dem Gehäuse verbunden ist,
- das andere der beiden Hohlräder (13 bzw. 14) Teil der Abtriebswelle (8) des Getriebemotors ist,
- bei den Zahnkranz-Hohlradpaarungen (12/14) bzw. (11/13) unterschiedliche Übersetzungen vorliegen,
**dadurch gekennzeichnet,**
**dass** die ineinander kämmenden Verzahnungsbereiche des ersten Zahnkranzes (11) mit dem ersten Hohlrad (13) und des zweiten Zahnkranzes (12) mit dem zweiten Hohlrad (14) zumindest über einen axialen Teilbereich radial ineinander liegen.

2. Getriebemotor nach Anspruch 1
**dadurch gekennzeichnet,**
**daß** die Abtriebswelle (8) einerseits an dem Motorgetriebegehäuse (1) und andererseits auf dem zweiten Wellenbereich (7) der Rotorwelle (4) gelagert ist.

3. Getriebemotor nach Anspruch 1 oder 2,
**dadurch gekennzeichnet,**
**daß** die Abtriebswelle (8) topfförmig ausgebildet ist und mit ihrer zylindrischen Topfwand das Motorgetriebegehäuse (1), auf dem sie axial neben den Zahnrädern (11,12) in einem radial den Elektromotor (3) umfassenden Bereich drehgelagert ist, umfaßt.

4. Getriebemotor nach Anspruch 3,
**dadurch gekennzeichnet,**
**daß** die Drehlagerung der Abtriebswelle (8) über Nadellager erfolgt.

5. Getriebemotor nach einem der vorhergehenden Ansprüche,
**dadurch gekennzeichnet,**
**daß** Teile des Getriebemotors stoffschlüssig miteinander verbunden sind.

6. Getriebemotor nach Anspruch 5,
**dadurch gekennzeichnet,**
**daß** die stoffschlüssige Verbindung eine Verklebung ist.

7. Getriebemotor nach Anspruch 5 oder 6,
**dadurch gekennzeichnet,**
**daß** ein Teil der Zahnkränze (11,12) und der Hohlräder (13,14) stoffschlüssig mit Trägerteilen verbunden ist.

8. Getriebemotor nach einem der vorhergehenden Ansprüche,
**dadurch gekennzeichnet,**
**daß** an der von dem Getriebe abgewandten Seite des Elektromotors ein Drehsensor (16) an dem Motorgetriebegehäuse drehund verschiebefest gelagert ist, wobei in dessen Inneren die Rotorwelle (4) bei aktivem Getriebemotor rotiert.

## Claims

1. A geared motor, whereby
- the motor is an electric motor (3) and the gear is a planetary gear,
- the gear and the electric motor are arranged in axial proximity in an approximately cylindrical housing (1),
- the electric motor (3) has a stator ring in a fixed mount on the housing, having a rotor (5) which rotates in it about an axis (Z) running centrally in the housing (1) on a rotor shaft (4) fixedly connected to the rotor as the driving means of the gear, and
- the rotor shaft (4) meshes with the gear with a first shaft area (6) adjacent to the electric motor (3) axially and a second shaft area (7) connected to the former axially,
- the first shaft area (6) is designed with an axis (E) that is offset eccentrically with respect to the rotor shaft (4) with the axis (Z), where the axes (Z and E) are parallel and are spaced apart by an eccentricity value (e),
- a force transmission means (10) having two separate peripheral gearings (11, 12) running centrally to the E axis, designed as first and second ring gears (11, 12), rotate on the eccentrically offset first shaft area (6),
- the two ring gears (11, 12) mesh in hollow wheels with teeth running centrally to the Z axis, namely the first ring gear (11) meshing in the first hollow wheel (13) and the second ring gear (12) meshing in the second hollow wheel (14),
- one of the two hollow wheels (13, 14) with teeth is fixedly connected to the housing,
- the other of the two hollow wheels (13 or 14) with teeth is part of the output shaft (8) of the geared motor,
- the pairs of ring gear and hollow wheel (12/14) or (11/13) have different transmission ratios,
**characterized in that**
- the intermeshing toothed areas of the first ring gear (11) with the first hollow wheel (13) and the second ring gear (12) with the second hollow wheel (14) are situated radially one inside the other at least over a partial axial area.

2. The geared motor according to Claim 1,
**characterized in that** the output shaft (8) is mounted on the motor gear housing (1) on the one end and on the second shaft area (7) of the rotor shaft (4) on the other end.

3. The geared motor according to Claim 1 or 2,
**characterized in that** the output shaft (8) is designed to be pot-shaped and with its cylindrical pot wall it surrounds the motor gear housing (1) on which it is rotationally mounted axially next to the gear wheels (11, 12) in an area surrounding the electric motor (3) radially.

4. The geared motor according to Claim 3,
**characterized in that** the rotational mounting of the output shaft (8) is accomplished over needle-roller bearings.

5. The geared motor according to one of the preceding claims,
**characterized in that** parts of the geared motor are joined together by bonding methods.

6. The geared motor according to Claim 5,
**characterized in that** the bonded joint is produced by gluing.

7. The geared motor according to Claim 5 or 6,
**characterized in that** a part of the ring gears (11, 12) and the hollow wheels (13, 14) is bonded to the carrier parts.

8. The geared motor according to one of the preceding claims,
**characterized in that** a rotational sensor (16) is mounted in a rotationally fixed and displacement-proof manner on the side of the electric motor facing away from the gear, with the rotor shaft (4) rotating in its interior when the geared motor is active.

## Revendications

1. Moto-réducteur dans lequel
- le moteur est un moteur électrique (3) et la transmission est une transmission planétaire,
- la transmission et le moteur électrique (3) sont disposés en adjacence axiale dans un carter (1) à peu près cylindrique,
- le moteur électrique (3) possède une bague de stator solidaire du carter avec un rotor (5) tournant dans cette dernière autour d'un axe (Z) s'étendant au centre du carter (1), sur un arbre de rotor (4) assemblé fixement avec le rotor, comme moyen d'entraînement de la transmission,
- l'arbre de rotor (4) s'engage dans la transmission par une première zone d'arbre (6), axialement limitrophe du moteur électrique (3), et par une seconde zone d'arbre (7) qui lui fait suite axialement,
- la première zone d'arbre (6) est réalisée avec un axe (E) en déport excentré par rapport à l'arbre de rotor (4) avec l'axe (Z), les axes (Z et E) étant distants parallèlement d'une valeur d'excentricité (e),
- sur la première zone d'arbre (6) en déport excentré tourne un moyen de transmission de force (10) ayant deux dentures périphériques (11, 12) séparées l'une de l'autre, s'étendant de façon centrale par rapport à l'axe E, qui sont réalisées sous forme d'une première et d'une seconde couronne dentée (11 et 12),
- les deux couronnes dentées (11, 12) engrènent dans des roues à denture intérieure, s'étendant de façon centrale par rapport à l'axe Z, à savoir la première couronne dentée (11) dans une première roue à denture intérieure (13), et la seconde couronne dentée (12) dans une seconde roue à denture intérieure (14),
- l'une des deux roues à denture intérieure (13, 14) est assemblée fixement avec le carter,
- l'autre des deux roues à denture intérieure (13 ou 14) fait partie de l'arbre de sortie (8) du moto-réducteur,
- des rapports de transmission différents existent pour les paires couronne dentée-roue à denture intérieure (12/14) et (11/13),
**caractérisé en ce**
**que** les zones de denture engrenant l'une dans l'autre de la première couronne dentée (11) avec la première roue à denture intérieure (13) et de la seconde couronne dentée (12) avec la seconde roue à denture intérieure (14) se situent l'une dans l'autre radialement, au moins sur une zone partielle axiale.

2. Moto-réducteur suivant la revendication 1,
**caractérisé en ce**
**que** l'arbre de sortie (8) est monté d'une part sur le carter (1) du moto-réducteur, et d'autre part sur la seconde zone d'arbre (7) de l'arbre de rotor (4).

3. Moto-réducteur suivant l'une des revendications 1 et 2,
**caractérisé en ce**
**que** l'arbre de sortie (8) est réalisé en forme de pot, et entoure par sa paroi de pot cylindrique le carter (1) du moto-réducteur, sur lequel il est monté en rotation, axialement à côté des roues dentées (11, 12), dans une zone entourant radialement le moteur électrique (3).

4. Moto-réducteur suivant la revendication 3,
**caractérisé en ce**
**que** le support rotatif de l'arbre de sortie (8) est assuré par l'intermédiaire de roulements à aiguilles.

5. Moto-réducteur suivant l'une des revendications précédentes,
**caractérisé en ce**
**que** des parties du moto-réducteur sont mutuellement assemblées par alliance de matière.

6. Moto-réducteur suivant la revendication 5,
**caractérisé en ce**
**que** l'assemblage par alliance de matière est un collage.

7. Moto-réducteur suivant l'une des revendications 5 et 6,
**caractérisé en ce**
**qu'**une partie des couronnes dentées (11, 12) et des roues à denture intérieure (13, 14) est assemblée par alliance de matière avec des parties supports.

8. Moto-réducteur suivant l'une des revendications précédentes,
**caractérisé en ce**
**qu'**un capteur de rotation (16), sur le côté du moteur électrique opposé à la transmission, est monté fixe en rotation et en translation sur le carter du moto-réducteur, l'arbre de rotor (4) tournant à l'intérieur de celui-ci lorsque le moto-réducteur est actif.
